# EUROPEAN PATENT APPLICATION

(11) **EP 2 827 243 A1**
(43) Date of publication of application: **21.01.2015**
(21) Application number: 14167661.9
(22) Date of filing: 09.05.2014
(51) Int. Cl.: G06F 9/445

(54) **A method for avoiding downtime of production controls during software upgrades**

(30) Priority: 10.05.2013 GB 201308452
(71) Applicant: Vetco Gray Controls Limited, Bristol BS48 1BS (GB)
(72) Inventor: Addala, Ravi, 500081 Hyderabad (IN); Kunchakoori, Naresh, 500081 Hyderabad (IN)
(74) Representative: Illingworth-Law, William Illingworth

(57) **Abstract**

An apparatus for updating the software in a subsea electronics module (SEM), comprises: a first data transmitting and receiving means (1), a second data transmitting and receiving means (2), and a transmission line (3) between the first and the second data transmitting and receiving means (1, 2), wherein packets of data (6) from the first data transmitting and receiving means (1) are transmitted to the second data transmitting and receiving means (2) and aggregated to form a local master, from which software in SEMs may be updated locally. The packets of data (6) may be transmitted using unutilised capacity (5) of the transmission line (3) not required during normal operations.

## Description

### FIELD OF THE INVENTION

This invention relates to transmitting data and software to a Subsea Electronics Module.

### BACKGROUND OF THE INVENTION

The control of subsea fluid extraction wells is generally managed by a Subsea Electronics Module (SEM), which is typically housed in a Subsea Control Module (SCM), which is in turn mounted on a subsea Xmas tree located on the sea bed, above the fluid extraction well. SEMs contain a number of printed wiring boards which perform dedicated functions, such as the operation of hydraulic Directional Control Valves (DCVs), with communication to and from the SEM via a modem. The SEM in turn is connected to a Master Control Station (MCS) located topside via an umbilical.

SEMs contain software packages which are coded in high level programming language (though for small, very time-critical tasks assembly language may be used). The software enables the SEM to perform sequenced monitoring operations based on commands from the MCS, as well as allowing the SEM to store relevant data gathered from the subsea production system. This software may need to be upgraded from time to time, and for this purpose the SEM is programmable from the surface. The new version of the software may be downloaded from the MCS over a TCP/IP or any other suitable communication protocol, for example. However, presently production may need to be halted during the software upgrade, as the downloading process could occupy a portion of, or the entirety of, the bandwidth of the communication path of the umbilical.

As a result the downtime of subsea production control systems during software upgrades is an expensive operation for the well operator. Depending on the type of modem used, the type of cable used in the umbilical (copper, optical etc.) and the distance between the MCS and the SEM this downtime can range from a few minutes to hours.

The existing techniques to reduce downtime employ a Remotely Operated underwater Vehicle (ROV) to load software directly to a well SCM to update the software held in the SEM housed therein, thus avoiding the control system communication system. However, this technique is expensive due to the high cost of deploying an ROV to the sea bed.

### SUMMARY OF THE INVENTION

According to this invention from one aspect, there is provided a method for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, the method comprising the steps of:
providing the updated software data at the surface location, and
transmitting packets of the updated software data from the surface location to the underwater well via said data transfer path, wherein updated software packets are received at the underwater well on a modem card,
aggregating the packets of data on the modem card to form a software update package, and
using the software update package as a local master to update the software of one or more SEM.

Said updated software packets may be transmitted using time-division multiplexing or frequency-division multiplexing to utilise spare bandwidth of the data transfer path not required by said normal operation.

According to this invention from another aspect, there is provided a method for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, the method comprising the steps of:
providing the updated software data at the surface location, and
transmitting packets of the updated software data from the surface location to the underwater well via said data transfer path, wherein
the updated software packets are transmitted so as to use spare bandwidth of the data transfer path not required by said normal operation.

Said updated software packets could be received at the underwater well on a modem card. The updated software packets could be aggregated on the modem card until a software update package is formed. This software update package could then be used as a local master to update the software on one or more local single board computers (SBCs) in the SEMs. 'Local' here is intended to indicate a distance of around 1 metre, in comparison to the transmission line which may have a length in the range of 1km to 220km. For scenarios where two or more SEMs are hosted in a single SCM, the modem of a primary SEM can act as a local master to the modem of the other SEMs. If there is a communication distribution unit (as is known, per se, generally in the art), the modem of the communication distribution unit can act as a local master to upgrade the software for the surrounding SEMs.

Said transmission line could be a copper or fibre optic cable within an umbilical.

According to this invention from another aspect, there is provided an apparatus for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, comprising:
means for providing the updated software data at the surface location, and
means for transmitting packets of the updated software data from the surface location to the underwater well via said data transfer path, wherein the updated software packets are received at the underwater well on a modem card, said packets of data are aggregated on the modem card to form a software update package, and said software update package is used as a local master to update the software of one or more SEM.

Said transmitting means could transmit the updated software packets using time-division multiplexing or frequency-division multiplexing to utilise spare bandwidth of the data transfer path not required by said normal operation.

According to this invention from another aspect, there is provided an apparatus for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, comprising:
means for providing the updated software data at the surface location, and
means for transmitting packets of the updated software data from the surface location to the underwater well via said data transfer path, wherein
the transmitting means transmits the updated software packets so as to use spare bandwidth of the data transfer path not required by said normal operation.

Said updated software packets could be received at the underwater well on a modem card. The updated software packets could be aggregated on the modem card until a software update package is formed. This software update package could then be used as a local master to update the software on one or more local Single Board Computers (SBCs) in the SEMs. 'Local' here is intended to indicate a distance of around 1 metre, in comparison to the transmission line which may have a length in the range of 1km to 220km.

Said transmission line could be a copper or fibre optic cable within an umbilical.

Said Subsea Electronics Module could be housed in a Subsea Control Module that is operable to regulate fluid extraction from a well head.

### BRIEF DESCRIPTION OF THE DRAWINGS

Figures 1a-1d are a schematic diagram of the flow of data in a system according to an embodiment of the invention.
Figure 2 shows an apparatus for updating software in SEM cards in accordance with the present invention.

### DETAILED DESCRIPTION OF THE INVENTION

The embodiment to be described enables the software on a SEM in a subsea well control system (for example a well control system for a subsea hydrocarbon extraction well) to be updated with reduced downtime of the subsea production control system.

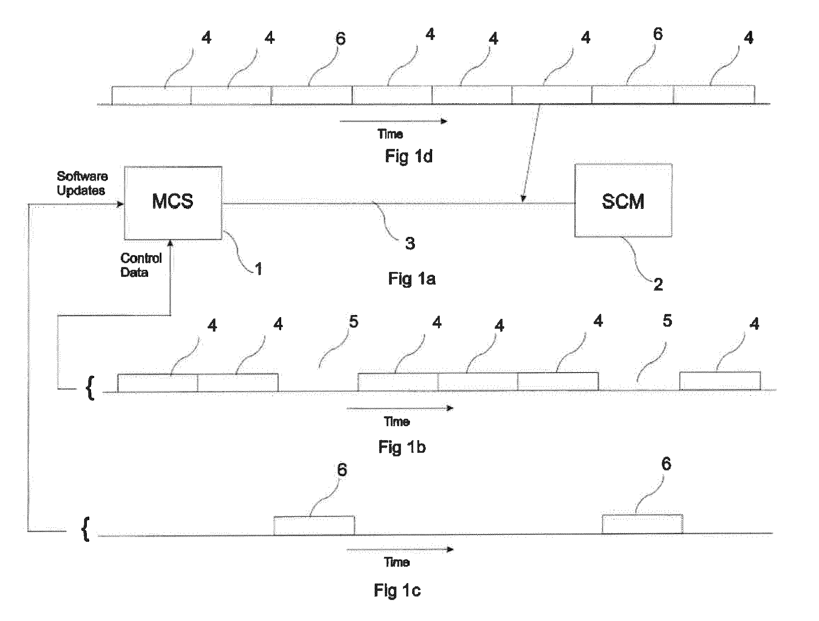

Referring to Fig. 1a, a Master Control Station (MCS) 1 located 'topside', i.e. at a surface location, feeds data to a Subsea Control Module (SCM) 2 mounted on a subsea well tree (not shown) via a fibre optic communications link within an umbilical 3, to control the fluid production process of the well. The control data is fed in packets 4 as shown in Fig. 1b.

Since the used communication capacity of the link is less than 100% (and frequently as low as 40%) there is spare capacity 5 shown as gaps in the stream of packets 4. This spare capacity 5 can be used to provide further packets of data 6, as shown in Fig. Ic, to update the software within the well control system without disrupting the control process. This reduces the downtime necessary to perform software upgrades with the effect that well production is maximised, and communication bandwidth is more effectively utilised. A communication link with a resultant communication capacity utilisation of 100% is illustrated in Fig. 1d. Note that although this schematic diagram shows the use of time-division multiplexing to insert updated software packets into spare bandwidth of the data transfer path, in alternative embodiments frequency-division multiplexing could be used instead.

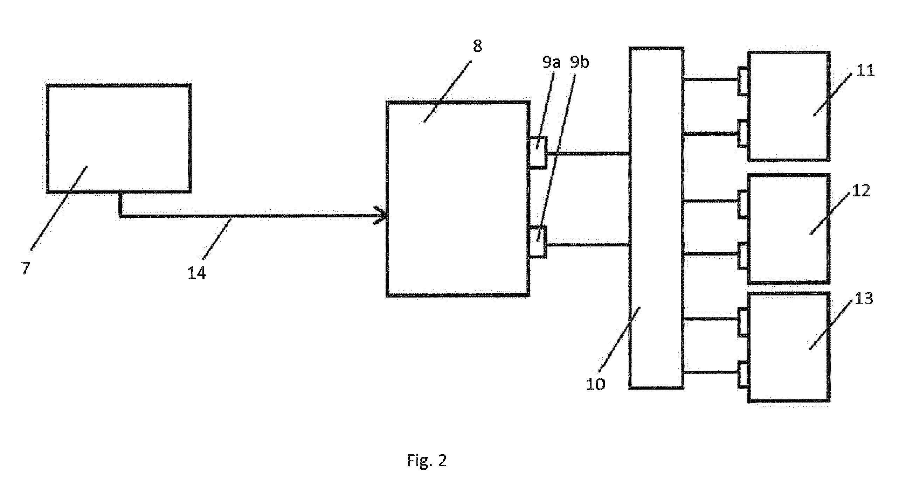

Fig. 2 shows a schematic diagram of an apparatus according to one embodiment of the invention. A Master Control Station (MCS) is located 'topside', i.e. at a surface location, and communicates to subsea components via an umbilical 14. A Subsea Control Module, containing a modem 8 and several Subsea Electronics Modules (SEMs) 11, 12, 13, is disposed at a subsea well tree for operating directional control valves in the subsea well tree to control hydrocarbon production.

A new software image is stored at the MCS 7, which is then transmitted via the umbilical 14 to a single board computer (SBC) of a modem 8 in the SCM. Once the software is downloaded completely on to the modem card (i.e. the SBC) of the SCM, a trigger signal from the MCS topside will trigger the modem card to, in turn, load the software into respective cards present inside a multiplicity of SEMs as required via Ethernet ports 9a, 9b, which communicate with the SEMs using an Ethernet switch blade 10. The various SEMs may contain a variety of different electronics cards. In the embodiment of Fig. 2, three modules are shown: a Sensor Support Module (SSM) 11, a Direction control valve Support Module (DSM) 12 and a Legacy Instrument Support Module (LISM) 13, however in practise any number of modules may be used.

Since the amount of time required for loading the software locally (over a distance of around 1 metre) is very low compared with downloading the software to individual cards (over an umbilical line between 1 and 220 kilometres), this approach may save a lot of downtime during upgrades. In addition to the shorter distances from the modem card to the SEM cards compared to the length of the umbilical, this communication may advantageously take place via backplane Ethernet, which has a much higher transfer speed than that between the MCS and the modem card.

The embodiment of the invention shown in Fig. 2 shows the software update package being transmitted from the MCS to a modem card of the SCM. However, the software update package may be downloaded to any of the cards in the multiplicity of SEMs, e.g. SSM, DSM, LISM, etc. and the software update package may be used as a local master to update the other SEMs via the Ethernet switch blade.

The preceding example illustrates the invention being used in a subsea well control system, however, it can be applied to any control system, particularly those involving long distances between the control station and the controlled facility, such as, for example, wind farms. It can also apply to any form of communications system including those employing amplitude, frequency or pulse width modulated carriers, digital or analogue, with the medium being electromagnetic radiation, copper or fibre optic, provided there is sufficient spare capacity on the data transfer path.

## Claims

1. A method for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, the method comprising the steps of:
providing the updated software data at the surface location, and
transmitting packets of the updated software data from the surface location to the underwater well via said data transfer path, wherein updated software packets are received at the underwater well on a modem card,
aggregating the packets of data on the modem card to form a software update package, and
using the software update package as a local master to update the software of one or more SEM.

2. A method according to claim 1, wherein the updated software packets are transmitted using time-division multiplexing to utilise spare bandwidth of the data transfer path not required by said normal operation.

3. A method according to claim 1, wherein the updated software packets are transmitted using frequency-division multiplexing to utilise spare bandwidth of the data transfer path not required by said normal operation.

4. A method for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, the method comprising the steps of:
providing the updated software data at the surface location, and
transmitting packets of the updated software data from the surface location to the underwater well via said data transfer path, wherein
the updated software packets are transmitted so as to use spare bandwidth of the data transfer path not required by said normal operation.

5. A method according to claim 4, further comprising the step of;
aggregating the packets of data on the modem card to form a software update package.

6. A method according to claim 5, further comprising the step of;
using the software update package as a local master to update the software of one or more SEM.

7. A method according to any of claims 1 to 3, or 6, wherein the step of using the software update package as a local master to update the software of one or more SEM is triggered by a trigger signal sent from the surface location.

8. An apparatus for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, comprising:
means for providing the updated software data at the surface location, and
means for transmitting packets of the updated software data from the surface location to the underwater well via said data transfer path, wherein the updated software packets are received at the underwater well on a modem card, said packets of data are aggregated on the modem card to form a software update package, and said software update package is used as a local master to update the software of one or more SEM.

9. An apparatus according to claim 8, wherein the transmitting means transmit the updated software packets using time-division multiplexing to utilise spare bandwidth of the data transfer path not required by said normal operation.

10. An apparatus according to claim 8, wherein the transmitting means transmit the updated software packets using frequency-division multiplexing to utilise spare bandwidth of the data transfer path not required by said normal operation.

11. An apparatus for updating the software in a subsea electronics module (SEM) of an underwater well, the SEM being in communication with a surface location via an umbilical cable comprising a data transfer path, wherein during normal operation data is transferred between the underwater well and the surface location via said transfer path, the data transfer during said normal operation requiring an associated bandwidth of the data transfer path, comprising:
means for providing the updated software data at the surface location, and
means for transmitting packets of the updated software data from the surface location to the underwater well via said data transfer path, wherein
the transmitting means transmits the updated software packets so as to use spare bandwidth of the data transfer path not required by said normal operation.

12. An apparatus according to claim 11, wherein the packets of data are aggregated on the modem card to form a software update package.

13. An apparatus according to claim 12, wherein the software update package is used as a local master to update the software of one or more SEM.

14. An apparatus according to any of claims 8 to 10, or 13, further comprising a trigger means at the surface location arranged to send a trigger signal to the modem card to trigger the use of the software update package as a local master to update the software of one or more SEM.

15. A subsea well control system including the apparatus of any of claims 8 to 14.
